# FASCICULE DE BREVET EUROPEEN

(11) **EP 1 048 211 B1**
(45) Date de publication et mention de la délivrance du brevet: **17.09.2003**
(21) Numéro de dépôt: 00401106.0
(22) Date de dépôt: 20.04.2000
(51) Int. Cl.: A01N 59/20

(54) **Traitement phytosanitaire des plantes et compositions utilisables à cet effet**
Phytosantitäre Behandlung von Pflanzen und dafür verwendbare Zusammensetzungen
Phytosanitary treatment of plants and compositions usable therefor

(30) Priorité: 26.04.1999 FR 9905236
(43) Date de publication de la demande: 02.11.2000
(73) Titulaire: CEREXAGRI S.A., 78370 Plaisir (FR)
(72) Inventeur: Ferrier, Frédéric, 13007 Marseille (FR); Le Bras, Edwige, 13015 Marseille (FR); Ramel, Georges, 13340 Rognac (FR); Joncheray, Gérard, 27200 Vernon (FR)
(74) Mandataire: Granet, Pierre

(56) Documents cités:
- EP-A- 0 007 307
- EP-A- 0 565 266
- EP-A- 0 766 919
- WO-A-91/13552
- WO-A-94/24225
- GB-A- 2 333 707
- PATENT ABSTRACTS OF JAPAN vol. 4, no. 61 (C-009), 8 mai 1980 (1980-05-08) & JP 55 027164 A (RIKAGAKU KENKYUSHO), 27 février 1980 (1980-02-27)
- DATABASE CHEMABS [en ligne] CHEMICAL ABSTRACTS SERVICE, COLUMBUS, OHIO, US; retrieved from STN-INTERNATIONAL, accession no. 112:93919 XP002127853 & HU 48 438 A (BORSODI VEGYI) 28 juin 1989 (1989-06-28)
- traduction en Anglais de JP-A-55027164
- traduction en Anglais de HU-A-48438

## Description

La présente invention concerne le domaine phytosanitaire et a plus particulièrement pour objet le traitement antifongique des cultures, ainsi que des compositions cupriques utilisables pour ce traitement.

Les plantes cultivées sont sujettes à de nombreuses maladies dues notamment à des champignons phytopathogènes dont le plus connu est *plasmopara viticola* responsable du mildiou de la vigne.

Les moyens de lutte contre ces parasites font appel à différents types de compositions que l'on peut classer en deux grandes catégories :
- les compositions cupriques dont le principe actif est l'ion cuivre Cu²⁺ ;
- les produits organiques de synthèse dont l'activité n'est pas directement liée à la présence d'ions cuivre Cu²⁺.

Le rôle des ions cuivre Cu²⁺ comme moyen de protection contre des maladies causées par des champignons phytopathogènes est connu depuis longtemps. Ainsi, par exemple, le sulfate de cuivre est connu pour être un très bon fongicide mais il est hautement phytotoxique du fait de son acidité et de sa grande solubilité dans l'eau où la totalité du cuivre se trouve sous forme d'ions cuivriques aqueux (Cu²⁺aq).

Afin de pallier ce problème de phytotoxicité, l'utilisation du sulfate de cuivre seul a été remplacée par celle mettant en oeuvre sa forme neutralisée, cette neutralisation pouvant se faire avec un agent alcalin tel que, par exemple, l'hydroxyde de calcium ou l'hydroxyde de sodium.

L'une de ces formes neutralisées, d'utilisation très ancienne et toujours d'actualité, est le résultat d'un mélange aqueux de sulfate de cuivre et de chaux, mélange plus connu sous le nom de bouillie bordelaise.

D'autres compositions cupriques de type classique, également utilisées dans ce domaine, sont par exemple l'oxychlorure de cuivre, l'hydroxyde de cuivre, le carbonate de cuivre et l'oxyde cuivreux.

Ces fongicides cupriques classiques sont généralement formulés sous forme de poudres mouillables, de granulés dispersibles ou de solutions ou suspensions concentrées aqueuses.

On les utilise généralement à raison de 3000 g d'équivalent cuivre métal pour 200 litres d'eau et par hectare, en pulvérisation sur les plantes à protéger (feuillage, tronc, fruits).

Les fongicides cupriques tels que la bouillie bordelaise, l'oxychlorure de cuivre, l'hydroxyde de cuivre, le carbonate de cuivre et l'oxyde cuivreux sont des complexes très faiblement solubles dans l'eau à pH neutre. La quantité de cuivre soluble aqueux (Cu²⁺aq) libéré par ceux-ci est de l'ordre de quelques ppm (1 à 10 mg/l) à pH7, mais cette très faible quantité de cuivre Cu²⁺aq suffit à assurer l'activité antifongique vis-à-vis des champignons phytopathogènes comme *plasmopara viticola*.

Cependant, malgré leur efficacité anticryptogamique, les fongicides cupriques classiques présentent trois inconvénients majeurs:
- la non-maîtrise de la quantité du principe actif Cu²⁺aq libéré après l'application,
- la disparition d'une partie ou de l'intégralité de l'activité antifongique de Cu²⁺aq par formation de complexes avec certaines molécules biologiques (notamment thiols) présentes à la surface de la feuille,
- un recouvrement partiel du végétal, plus ou moins important selon la finesse du produit.

Malgré une bonne neutralisation du composé cuprique et de sa formulation, la quantité de cuivre aqueux relarguée peut varier sensiblement et entraîner une phytotoxicité. En effet, la quantité de cuivre Cu²⁺aq, libéré à partir de la composition solide déposée sur les feuilles lors de la pulvérisation, évolue d'une façon imprévisible en fonction de la variation des différents facteurs de l'environnement proche du solide. Ces facteurs sont par exemple l'humidité ambiante, le gaz carbonique solubilisé, la température et la présence de certains exsudats végétaux et/ou micro-organiques tels que l'acide acétique. La quantité de Cu²⁺aq peut ainsi passer, par exemple, de quelques ppm à plus de 100 ppm, entraînant un risque de phytotoxicité. Bien que la bouillie bordelaise soit le composé cuprique le moins sensible à ces variations, l'équilibre entre effet fongicide optimal et phytotoxicité, fonction de la quantité de Cu²⁺aq relarguée ponctuellement dans le microdomaine, reste néanmoins non maîtrisable avec les composés cupriques classiques.

Leur second inconvénient réside dans la complexation de Cu²⁺aq par certains exsudats végétaux et/ou micro-organiques qui rendent non biodisponible, et donc inactive contre l'agent pathogène, une partie de la matière active (Cu²⁺aq) issue du composé cuprique. Certaines molécules appartenant au groupe des thiols peuvent ainsi éliminer une partie de la matière active (Cu²⁺aq) par précipitation. On perd ainsi une partie de l'efficacité du composé cuprique classique.

Enfin, les particules cupriques constituant le réservoir d'ion Cu²⁺aq sont en partie perdues par entraînement mécanique (lessivage) lors d'une pluie et ce malgré une formulation appropriée de type adhérente et/ou l'utilisation d'une bouillie bordelaise comme composé cuprique, celle-ci étant reconnue comme la plus adhérente sur le feuillage comparativement aux autres composés cupriques classiques. Ce phénomène est d'autant plus important que l'acidité du milieu est forte.

Ces inconvénients font que, d'une part, la qualité de la protection fongicide procurée par les composés cupriques varie avec les facteurs de l'environnement et que, d'autre part, la quantité totale de cuivre pulvérisée à l'hectare est supérieure à la quantité de cuivre minimale nécessaire sous forme biodisponible. Ceci implique l'obligation d'employer une dose minimale de 3000 g/ha en cuivre métal pour assurer une bonne protection fongicide.

L'invention a donc pour but de remédier à ces inconvénients et de fournir des compositions phytosanitaires cupriques répondant mieux aux exigences d'efficacité maximale avec des doses de cuivre par hectare plus faibles (comparativement à l'utilisation de produits cupriques traditionnels), tout en ne présentant pas le risque phytotoxique ou en le réduisant.

On sait par la demande de brevet WO 91/13552 que la présence de certains chélates de cuivre comme le citrate de cuivre ou le malate de cuivre permettent d'augmenter la protection fongicide. Cependant, ces chélates de cuivre présentent l'inconvénient d'être très solubles et donc totalement lessivables, ce qui ne permet pas une protection durable contre l'agent pathogène.

La demande de brevet EP-A-7 307 décrit l'association de saccharate de calcium et de bouillie bordelaise et son utilisation pour le traitement des cultures.

Le document JP-A-55027164 présente des associations de sels métalliques avec un composé chimique acide ou basique et minéral ou organique. Le document HU-A-48438 concerne des alkylphosphonates métalliques associés à des sels de cuivre pour en augmenter l'efficacité biologique.

Il a maintenant été trouvé qu'en association avec un fongicide cuprique classique, constituant une source d'ions Cu²⁺, les chélates de calcium, de zinc ou de manganèse faiblement solubles permettent d'obtenir in situ (sur le végétal) la libération graduelle du chélate de cuivre correspondant.

L'invention a donc pour principal objet un procédé de traitement phytosanitaire des plantes, caractérisé en ce qu'il consiste à associer une source de cuivre sous forme non chélatée et un chélate faiblement soluble de calcium et/ou de zinc et/ou de manganèse, pour obtenir in situ la libération graduelle d'un chélate de cuivre soluble.

L'invention a également pour objet une composition phytosanitaire comprenant une source de cuivre sous forme non chélatée et au moins un chélate d'un acide α-hydroxycarboxylique, diphosphonique, polyphosphonique ou α-hydroxyphosphonique et de calcium et/ou de zinc et/ou de manganèse.

Dans le procédé et la composition phytosanitaire selon l'invention, la source de cuivre sous forme non chélatée est avantageusement choisie parmi les composés cupriques classiques tels que, par exemple, la bouillie bordelaise, l'hydroxyde de cuivre, l'oxychlorure de cuivre, le carbonate de cuivre, l'oxyde cuivreux et les hydroxosulfates de cuivre (brochantite, posnjakite, antlérite).

Selon un mode préféré de mise en oeuvre de la présente invention, on utilise comme source de cuivre une bouillie bordelaise conforme au brevet FR 2 739 256 dont le contenu est incorporé ici par référence. Dans la bouillie bordelaise conforme au brevet précité, la quasi totalité du cuivre est à l'état de brochantite et, à l'état sec, elle ne contient pas plus de 20 % en poids de bassanite. Une telle bouillie bordelaise peut être obtenue en faisant réagir une solution aqueuse de sulfate de cuivre et une suspension aqueuse de chaux dans un rapport molaire Ca(OH)₂/CuSO₄ compris entre 0,60 et 0,75 (de préférence entre 0,65 et 0,70 environ), à une température allant de l'ambiante jusqu'à 90°C (de préférence entre environ 40 et 70°C) et pendant un temps suffisant pour transformer la quasi totalité des complexes de cuivre en brochantite. Le produit réactionnel se présente sous forme d'une suspension aqueuse plus ou moins concentrée qui ne contient pas de bassanite et qui, éventuellement après concentration sous forme de pâte (par exemple, par centrifugation), peut être utilisée directement pour la fabrication de formulations fongicides de type SC (suspensions liquides concentrées) ou de type WG (granulés) dispersibles dans l'eau. Pour la fabrication de poudres mouillables du type WP, la pâte obtenue après concentration est séchée dans des conditions telles que la teneur en bassanite du produit sec n'excède pas 20%; cette teneur peut être facilement contrôlée par l'analyse du titre en cuivre du produit sec, qui ne doit pas dépasser 27,3 % en poids.

Par l'expression "chélate de calcium et/ou de zinc et/ou de manganèse", on entend ici tout composé ou mélange de composés présentant le ou les éléments calcium et/ou zinc et/ou manganèse chélaté(s) par au moins un acide α-hydroxycarboxylique, diphosphonique, polyphosphonique ou α-hydroxyphosphonique, avec ou sans neutralisation des fonctions acides par un agent alcalin.

Comme exemples d'acides α-hydroxycarboxyliques on peut mentionner les acides citrique, glycolique, tartronique, gluconique, lactique, malique, tartrique et saccharique, les cinq derniers pouvant être sous la forme L ou D ou DL.

Comme exemples d'acides phosphoniques ou α-hydroxyphosphoniques on peut mentionner les acides nitrilotris(méthylènephosphonique), éthylènediamine-tétrakis(méthylènephosphonique), hexaméthylènediamine-tétrakis(méthylènephosphonique), diéthylènetriamine-pentakis(méthylènephosphonique) et 1-hydroxyéthane-1,1-diphosphonique.

Dans le cadre de la présente invention, la solubilité dans l'eau du chélate de calcium et/ou de zinc et/ou de manganèse à utiliser peut aller de 0,001 à 50 g/l à la température ambiante. Avantageusement, on choisira un chélate dont la solubilité est comprise entre 0,01 et 5 g/l.

La quantité de chélate de calcium et/ou de zinc et/ou de manganèse dans la composition selon l'invention doit être suffisante pour chélater et solubiliser, de façon graduelle, une partie au moins des ions Cu²⁺ présents dans la source de cuivre. Généralement, on utilisera au sein des compositions selon l'invention un rapport molaire chélate/cuivre compris entre 0,005 et 10, de préférence compris entre 0,01 et 5 et, plus préférentiellement, compris entre 0,05 et 1.

Les compositions selon l'invention peuvent être présentées sous forme de suspensions, de poudres mouillables, de poudres pour poudrage ou de granulés dispersibles. D'une façon générale, la présence d'un chélate de calcium, de zinc ou de manganèse au sein des compositions phytosanitaires n'empêche nullement que celles-ci puissent être formulées à l'aide des adjuvants habituellement utilisés par l'homme de l'art (agents tensio-actifs, agents antimousse, charges inertes, ...) et contenir également des fongicides organiques usuels.

On a pu mettre en évidence la remarquable efficacité des compositions selon l'invention dans une large zone de pH (2,5 à 12), notamment en milieu neutre ou alcalin où le cuivre n'est pas sous forme Cu²⁺aq mais est lié au chélate considéré tout en restant soluble. Il est cependant recommandé d'ajuster le pH des compositions pour que, après dilution et lors de l'application, le pH soit entre 5,0 et 9,0 et plus particulièrement entre 6,0 et 9,0, de façon à éviter lors de l'application une phytotoxicité ou un effet dépressif du végétal dû à un pH trop acide ou trop alcalin. D'autre part, l'utilisation conjointe de certaines matières actives phytosanitaires comme, par exemple, le cymoxanil qui est instable en milieu alcalin nécessite l'ajustement du pH de la composition.

En tout état de cause, l'ajustement du pH, s'il est requis, peut être réalisé à l'aide de tout agent alcalin usuel et notamment de soude, de potasse, d'ammoniaque ou de chaux.

Les chélates de calcium et/ou de zinc et/ou de manganèse à utiliser selon l'invention peuvent être préparés selon des méthodes générales connues de l'homme du métier. Une méthode appropriée consiste, par exemple, à neutraliser la ou les fonction(s) acide(s) de l'acide ou des acides précurseurs α-hydroxycarboxylique, diphosphonique, polyphosphonique ou α-hydroxyphosphonique par un ou plusieurs composé(s) basique(s) des métaux précités. Ainsi, par exemple, on obtient le citrate de calcium à partir d'acide citrique et d'hydroxyde de calcium, utilisés en solution dans l'eau dans des rapports stoechiométriques adaptés pour atteindre la neutralité de la suspension.

La dose d'emploi des compositions selon l'invention peut varier dans de larges limites. Elle peut aller de 30 à 3000 g de cuivre par hectare, mais elle est de préférence comprise entre 300 et 3000 g de cuivre par hectare et, plus particulièrement, entre 500 et 2500 g.

Les exemples suivants illustrent l'invention sans la limiter. Sauf indication contraire, les parties et les pourcentages indiqués sont exprimés en poids.

### EXEMPLE 1 : Préparation d'un précipité de citrate de calcium

Dans un réacteur et sous agitation, on a introduit 24000 g d'eau, puis 5043,4 g d'acide citrique monohydrate pur. Après dissolution complète de l'acide citrique, on a introduit une solution de 2778,4 g d'hydroxyde de calcium dans 6000 g d'eau.

On a obtenu ainsi un précipité de citrate de calcium qu'on a ensuite filtré et séché à 75°C. La solubilité dans l'eau du produit final ainsi obtenu est de 0,8 g/litre. Son titre en calcium est de 21 %.

### EXEMPLE 2 : Préparation d'un précipité de malate de calcium

Dans un réacteur et sous agitation, on a introduit 5000 g d'eau, puis 4023 g d'acide malique monohydrate pur. Après dissolution complète de l'acide malique, on a introduit une solution de 2200 g d'hydroxyde de calcium dans 2000 g d'eau.

On a obtenu ainsi un précipité de malate de calcium qu'on a ensuite séché dans une chambre d'atomisation à 75°C. La solubilité dans l'eau du produit final ainsi obtenu est de 3,3 g/litre.

### EXEMPLE 3 : Préparation d'une composition de bouillie bordelaise et de citrate de calcium

Dans un mélangeur on a introduit 57,7 parties de bouillie bordelaise technique à 26,5 % de cuivre ("BB sèche" décrite à l'exemple 1 du brevet FR 2 739 256), 6,8 parties de citrate de calcium obtenu selon l'exemple 1, 7 parties de lignosulfonate de sodium, 4 parties de naphtalènesulfonate de sodium, 0,5 partie d'un agent antimousse, 2 parties d'un pigment et 22 parties de kaolin, puis on a broyé le mélange et obtenu ainsi une poudre mouillable à 15 % de cuivre dont 10 % sont potentiellement solubilisables par les anions citrate soluble libérés à partir du citrate de calcium.

### EXEMPLE 4 : Préparation d'une composition de bouillie bordelaise et de citrate de calcium

Dans un mélangeur on a introduit 57,7 parties de bouillie bordelaise technique à 26,5 % de cuivre ("BB sèche" décrite à l'exemple 1 du brevet FR 2 739 256), 28,8 parties de citrate de calcium obtenu selon l'exemple 1, 7 parties de lignosulfonate de sodium, 4 parties de naphtalènesulfonate de sodium, 0,5 partie d'un agent antimousse et 2 parties d'un pigment, puis on a broyé le mélange et obtenu ainsi une poudre mouillable à 15 % de cuivre dont 43 % sont potentiellement solubilisables par les anions citrate soluble libérés à partir du citrate de calcium.

### EXEMPLE 5 : Préparation d'une composition de bouillie bordelaise et de malate de calcium

Dans un mélangeur on a introduit 57,7 parties de bouillie bordelaise technique à 26,5 % de cuivre ("BB sèche" décrite à l'exemple 1 du brevet FR 2 739 256), 23,2 parties de malate de calcium obtenu selon l'exemple 2, 7 parties de lignosulfonate de sodium, 4 parties de naphtalènesulfonate de sodium, 0,5 partie d'un agent antimousse, 2 parties d'un pigment et 22 parties de kaolin, puis on a broyé le mélange et obtenu ainsi une poudre mouillable à 15 % de cuivre dont 43 % sont potentiellement solubilisables par les anions malate soluble libérés à partir du malate de calcium.

### EXEMPLE 6 : Préparation d'une composition d'hydroxyde de cuivre et de citrate de calcium

Dans un mélangeur on a introduit 66,7 parties d'hydroxyde de cuivre technique à 62% de cuivre, 18,7 parties de citrate de calcium obtenu suivant l'exemple 1, 7 parties de lignosulfonate de sodium, 4 parties de naphtalènesulfonate de sodium, 0,5 partie d'un agent antimousse et 3,1 parties de kaolin, puis on a broyé le mélange et obtenu ainsi une poudre mouillable à 40 % de cuivre dont 10 % sont potentiellement solubilisables par les anions citrate soluble libérés à partir du citrate de calcium.

### EXEMPLE 7: Préparation d'une suspension concentrée aqueuse d'oxychlorure de cuivre et de citrate de calcium

Dans un réacteur contenant 2143 g d'eau, on a introduit sous agitation 204 g de naphtalènesulfonate de sodium et 3,4 g d'agent antimousse. Après dissolution complète, on a introduit sous agitation 1354 g d'oxychlorure de cuivre à 57 % de cuivre et, après dispersion complète, 694 g de citrate de calcium obtenu selon l'exemple 1.

Après parfaite homogénéisation, on a obtenu une suspension aqueuse titrant 250 g/litre de cuivre dont 20% sont potentiellement solubilisables par les anions citrate soluble libérés à partir du citrate de calcium.

### EXEMPLE 8: Solubilité des compositions selon l'invention

Afin d'apprécier les solubilités des compositions selon l'invention, les quantités de cuivre soluble ont été évaluées in vitro et comparées à celles obtenues pour la bouillie Bordelaise poudre mouillable (BB RSR WP) décrite à l'exemple 3 du brevet FR 2 739 256 et pour une composition de citrate de cuivre disodique pur. Les mesures ont été effectuées après mise en suspension dans l'eau des différentes formulations suivant les conditions habituellement appliquées in vivo (3000 g de cuivre pour 200 litres d'eau). Le dosage du cuivre soluble a été effectué après filtration à 0,45 µm.

Les résultats sont regroupés dans le tableau suivant dont les deux dernières colonnes indiquent, par rapport à la quantité totale de cuivre, la proportion de cuivre solubilisé après 30 minutes d'équilibre (deuxième colonne) et celle de cuivre chélaté libérable ultérieurement (troisième colonne).

| Complexe de cuivre | % de cuivre solubilisé après 30 minutes | % de cuivre chélaté libérable ultérieurement |
|---|---|---|
| Bouillie bordelaise RSR (WP) | 0,4 | 0 |
| Citrate de cuivre disodique pur | 100 | 0 |
| Poudre de l'exemple 3 | 2,3 | 7,7 |
| Poudre de l'exemple 4 | 2,5 | 40,5 |
| Poudre de l'exemple 5 | 2,0 | 41 |
| Poudre de l'exemple 6 | 2,9 | 7,1 |

### EXEMPLE 9: Libération contrôlée du chélate de cuivre

Afin d'apprécier le contrôle de la libération du chélate de cuivre apportée par les compositions selon l'invention, les quantités de cuivre solubilisé sous la forme de chélate de cuivre ont été mesurées en fonction du temps et dans des conditions habituellement pratiquées in vivo (3000 g de cuivre pour 200 litres d'eau).

Les libérations de cuivre soluble sous la forme de chélate de cuivre ont été évaluées dans le cas des associations suivantes :
A₁ = bouillie bordelaise technique à 26 % de cuivre/citrate de calcium
A₂ = oxychlorure de cuivre à 57 % de cuivre/citrate de calcium
A₃ = hydroxyde de cuivre à 62 % de cuivre/citrate de calcium

La quantité de citrate de calcium a été ajustée de telle manière que la quantité totale de cuivre potentiellement libérable à partir de citrate de calcium soit de 43 % de la teneur en cuivre total de la formule.

Les résultats, exprimés en ppm de cuivre soluble, sont rassembles dans le tableau suivant. A titre indicatif, la quantité de cuivre chélaté soluble issue directement d'un chélate de cuivre serait de 1500 ppm.

| **TEMPS** | **30 minutes** | **2 heures** | **24 heures** |
|---|---|---|---|
| A1 | 64 | 102 | 165 |
| A2 | 25 | 42 | 115 |
| A3 | 64 | 104 | 130 |

Le système selon l'invention permet, en cas de lessivage total du chélate de cuivre soluble présent dans l'eau à la surface du végétal, son remplacement en quantité équivalente à partir du réservoir d'ions citrate constitué par le précurseur citrate de calcium et à partir du réservoir de cuivre peu soluble constitué par le précurseur (bouillie bordelaise, hydroxyde de cuivre, oxychlorure de cuivre, ...).

Le citrate de calcium utilisé dans cet exemple avait été préparé de la manière suivante :

Dans un réacteur et sous agitation, on a introduit 266 g d'eau, puis 77,8 g d'hydroxyde de calcium. Après homogénéisation de la suspension, on a introduit une solution de 147,1 g d'acide citrique monohydraté dans 266 g d'eau. On a obtenu ainsi un précipité de citrate de calcium qu'on a ensuite filtré et séché à 65°C. Le produit final ainsi obtenu a une solubilité dans l'eau de 1,0 g.l⁻¹ et son titre en calcium est de 24 %.

### EXEMPLE 10

Dans le cadre de la lutte contre le mildiou de la vigne, des essais de traitement à doses de cuivre par hectare réduites ont été effectués avec les compositions selon l'invention et comparativement à la bouillie bordelaise. Les essais ont été réalisés sur jeunes plants de vigne selon la méthode CEB n°7 (essais sous brumisation avec contamination artificielle) établie par la Commission des Essais Biologiques de l'Association Nationale pour la Protection des Plantes. Les résultats des essais sont rassemblés dans le tableau suivant.

| **Essais à doses réduites - Tests préventifs** | | |
|---|---|---|
| **Composition testée** | **Dose de cuivre par hectare** | **% d'attaque** |
| Néant (témoin) | 0 g/ha | 96,0 |
| Bouillie bordelaise RSR | 3000 g/ha | 73,75 |
| | 2400 g/ha | 72,5 |
| | 2000 g/ha | 90,0 |

| Composition selon l'invention: | | |
|---|---|---|
| - exemple 3 | 2000 g/ha | 81,25 |
| - exemple 4 | 2000 g/ha | 81,25 |
| - exemple 4 | 1500 g/ha | 73,75 |
| - exemple 5 | 2000 g/ha | 81,25 |

Les résultats du tableau précédent montrent globalement que les compositions selon l'invention sont très efficaces, même à faibles doses de cuivre par hectare. Utilisées à la dose de cuivre de 2000 g/ha, toutes les compositions selon l'invention se révèlent plus efficaces que la bouillie bordelaise utilisée à la même dose. De plus, à la dose de 1500 g/ha, la composition de l'exemple 4 est aussi efficace que la bouillie bordelaise utilisée à la dose de 3000 g/ha.

### EXEMPLE 11

Dans le cadre de la lutte contre le mildiou de la vigne, des essais de traitement à doses réduites de cuivre par hectare ont été effectués avec une composition selon l'invention et comparativement à la bouillie bordelaise Ces essais ont été réalisés sur ceps fructifères, selon la méthode CEB n°7 ; les résultats des essais sont rassemblés dans le tableau suivant.

| **Composition testée** | **Dose de Cu par hectare** | **NOTATIONS** | | | | | | |
|---|---|---|---|---|---|---|---|---|
| | | Grappes | | | | Feuilles | | |
| | | **1** | **2** | **3** | **4** | **5** | **6** | **7** |
| Néant (témoin) | - | 100 | 62,4 | - | - | 97,7 | 52,8 | - |
| BB RSR | 3000 | 19,9 | 3,13 | 72,5 | 27,6 | 57,0 | 7,9 | 9,4 |
| | 2400 | 24,4 | 3,1 | 87,1 | 34,0 | 61,5 | 8,8 | 10,6 |
| | 1000 | 36,8 | 6,2 | 77,7 | 31,9 | 76,2 | 14,0 | 15,6 |
| EXEMPLE 4 | 1500 | 22,5 | 2,9 | 75,9 | 28,8 | 68 | 13,5 | 11,9 |
| | 1000 | 28,9 | 6,7 | 96,1 | 40,0 | 72,5 | 15,7 | 15,6 |
| | 500 | 55,8 | 14,5 | 84,9 | 51,7 | 85,7 | 23,0 | 14,9 |

1- Pourcentage de grappes atteintes après 3 semaines d'essai
2- " " dégâts sur grappes après 3 semaines d'essai
3- " " grappes atteintes après 10 semaines d'essai
4- " " dégâts sur grappes après 10 semaines d'essai
5- " " feuilles atteintes après 2 semaines d'essai
6- " " dégâts sur feuilles après 2 semaines d'essai
7- " " global d'atteinte sur feuilles après 10 semaines d'essai

Les résultats du tableau précédent montrent globalement que la composition selon l'exemple 4, utilisée à la dose de cuivre de 1500 g/ha, est aussi efficace que la bouillie bordelaise utilisée à la dose de cuivre de 3000 g/ha.

## Revendications

1. Procédé de traitement phytosanitaire des plantes, **caractérisé en ce qu'**il consiste à associer une source de cuivre sous forme non chélatée et un chélate faiblement soluble de calcium et/ou de zinc et/ou de manganèse, pour obtenir in situ la libération graduelle du chélate de cuivre soluble.

2. Composition phytosanitaire comprenant une source de cuivre sous forme non chélatée et au moins un chélate d'un acide α-hydroxycarboxylique, diphosphonique, polyphosphonique ou α-hydroxyphosphonique et de calcium et/ou de zinc et/ou de manganèse.

3. Composition phytosanitaire selon la revendication 2, **caractérisée en ce qu'**elle contient une quantité suffisante d'au moins un chélate de calcium et/ou de zinc et/ou de manganèse pour chélater une partie au moins des ions Cu²⁺ provenant de la source de cuivre.

4. Composition selon la revendication 2 ou 3, dans laquelle la source de cuivre est une bouillie bordelaise, le carbonate de cuivre, l'hydroxyde de cuivre, l'oxychlorure de cuivre, l'oxyde cuivreux ou un hydroxosulfate de cuivre.

5. Composition selon la revendication 2 ou 3, dans laquelle la source de cuivre est une bouillie bordelaise dont la quasi totalité du cuivre est à l'état de brochantite et qui, à l'état sec, ne contient pas plus de 20% en poids de bassanite.

6. Composition selon l'une des revendications 2 à 5, dans laquelle l'acide α-hydroxycarboxylique est choisi parmi les acides citrique, glycolique, tartronique, gluconique, lactique, malique, tartrique et saccharique, les cinq derniers pouvant être sous forme L, D ou DL.

7. Composition selon l'une des revendications 2 à 5, dans laquelle le chélate faiblement soluble est le citrate de calcium ou le malate de calcium.

8. Composition selon l'une des revendications 2 à 7, dans laquelle le rapport molaire : chélate/cuivre est compris entre 0.005 et 10, de préférence entre 0,01 et 5 et, plus particulièrement, entre 0,05 et 1.

9. Composition selon l'une des revendications 2 à 8, sous forme de suspension aqueuse, de poudre ou de granulés.

10. Composition selon l'une des revendications 2 à 9, comprenant en outre au moins un fongicide organique.

11. Procédé selon la revendication 1, dans lequel on applique sur la plante une composition selon l'une des revendications 2 à 10 à une dose telle que la quantité de cuivre en g/ha soit comprise entre 30 et 3000, de préférence entre 300 et 3000, et plus particulièrement entre 500 et 2500.

## Patentansprüche

1. Verfahren für die phytomedizinische Behandlung von Pflanzen, **dadurch gekennzeichnet, daß** man eine Kupferquelle in nicht chelatisierter Form und ein schwach lösliches Calcium- und/oder Zink- und/oder Manganchelat kombiniert, um in situ eine allmähliche Freisetzung des löslichen Kupferchelats zu erzielen.

2. Mittel für die phytomedizinische Behandlung von Pflanzen, enthaltend eine Kupferquelle in nicht chelatisierter Form und mindestens ein Calcium- und/oder Zink- und/oder Managanchelat einer α-Hydroxycarbonsäure, Diphosphonsäure, Polyphosphonsäure oder α-Hydroxyphosphonsäure.

3. Mittel für die phytomedizinische Behandlung von Pflanzen, nach Anspruch 2, **dadurch gekennzeichnet, daß** sie eine zur teilweisen Chelatisierung der aus der Kupferquelle stammenden Cu²⁺-Ionen ausreichende Menge an mindestens einem Calcium- und/oder Zink- und/oder Manganchelat enthält.

4. Zusammensetzung nach Anspruch 2 oder 3, wobei es sich bei der Kupferquelle um Bordeaux-Brühe, um Kupfercarbonat, Kupferhydroxid, Kupferoxychlorid, Kupfer(I)-oxid oder um ein Kupferhydroxosulfat handelt.

5. Zusammensetzung nach Anspruch 2 oder 3, wobei es sich bei der Kupferquelle um eine Bordeaux-Brühe handelt, bei der im Prinzip das gesamte Kupfer im Brochantit-Stadium vorliegt und die im trockenen Zustand nicht mehr als 20 Gew.-% Bassanit enthält.

6. Zusammensetzung nach einem der Ansprüche 2 bis 5, wobei die α-Hydroxycarbonsäure aus der Gruppe Zitronensäure, Glykolsäure, Tartronsäure, Glukonsäure, Milchsäure, Äpfelsäure, Weinsäure und Saccharinsäure stammt, wobei die fünf letztgenannten Säuren in L-, D- oder DL-Form vorliegen können.

7. Zusammensetzung nach einem der Ansprüche 2 bis 5, wobei es sich bei dem schwach löslichen Chelat um Calciumcitrat oder Calciummalat handelt.

8. Zusammensetzung nach einem der Ansprüche 2 bis 7, wobei das Molverhältnis Chelat zu Kupfer zwischen 0,005 und 10, vorzugsweise zwischen 0,01 und 5, besonders bevorzugt zwischen 0,05 und 1 liegt.

9. Zusammensetzung nach einem der Ansprüche 2 bis 8 in Form einer wäßrigen Suspension, eines Pulvers oder eines Granulats.

10. Zusammensetzung nach einem der Ansprüche 2 bis 9, die außerdem mindestens ein organisches Fungizid enthält.

11. Verfahren nach Anspruch 1, bei dem man eine Zusammensetzung nach einem der Ansprüche 2 bis 10 in solch einer Dosis, daß die Kupfermenge in g/ha zwischen 30 und 3 000, vorzugsweise zwischen 300 und 3 000, stärker bevorzugt zwischen 500 und 2 500 beträgt, auf die Pflanze ausbringt.

## Claims

1. Process for the plant-protection treatment of plants, **characterized in that** it consists in combining a copper source, in non-chelated form, and a sparingly soluble calcium and/or zinc and/or manganese chelate in order to obtain, in situ, the gradual release of the soluble copper chelate.

2. Plant-protection composition comprising a copper source, in non-chelated form, and at least one chelate of an α-hydroxycarboxylic, diphosphonic, polyphosphonic or α-hydroxyphosphonic acid and of calcium and/or of zinc and/or of manganese.

3. Plant-protection composition according to Claim 2, **characterized in that** it comprises a sufficient amount of at least one calcium and/or zinc and/or manganese chelate to chelate at least a portion of the Cu²⁺ ions originating from the copper source.

4. Composition according to Claim 2 or 3, in which the copper source is a Bordeaux mixture, copper carbonate, copper hydroxide, copper oxychloride, cuprous oxide or a copper hydroxide sulphate.

5. Composition according to Claim 2 or 3, in which the copper source is a Bordeaux mixture in which virtually all the copper is in the brochantite state and which, in the dry state, does not comprise more than 20% by weight of bassanite.

6. Composition according to one of Claims 2 to 5, in which the α-hydroxycarboxylic acid is chosen from citric, glycolic, tartronic, gluconic, lactic, malic, tartaric and saccharic acids, it being possible for the final five to be in the L, D or DL form.

7. Composition according to one of Claims 2 to 5, in which the sparingly soluble chelate is calcium citrate or calcium malate.

8. Composition according to one of Claims 2 to 7, in which the chelate/copper molar ratio is between 0.005 and 10, preferably between 0.01 and 5 and more particularly between 0.05 and 1.

9. Composition according to one of Claims 2 to 8, in the form of an aqueous suspension, of a powder or of granules.

10. Composition according to one of Claims 2 to 9, additionally comprising at least one organic fungicide.

11. Process according to Claim 1, in which a composition according to one of Claims 2 to 10 is applied on the plant at a dose such that the amount of copper in g/ha is between 30 and 3000, preferably between 300 and 3000 and more particularly between 500 and 2500.
